Europäisches Patentamt

(19) European Patent Office

Office européen des brevets

(11) Numéro de publication : **0 279 722 B1**

(12) **FASCICULE DE BREVET EUROPEEN**

(45) Date de publication du fascicule du brevet :
03.07.91 Bulletin 91/27

(21) Numéro de dépôt : **88400180.1**

(22) Date de dépôt : **27.01.88**

(51) Int. Cl.⁵ : **B32B 17/10, C08J 7/18**

(54) **Couche transparente en polyuréthane résistant à l'embuage, procédé de fabrication et vitrage muni de cette couche.**

(30) Priorité : 02.02.87 FR 8701184

(43) Date de publication de la demande :
24.08.88 Bulletin 88/34

(45) Mention de la délivrance du brevet :
03.07.91 Bulletin 91/27

(84) Etats contractants désignés :
AT BE CH DE ES FR GB IT LI LU NL SE

(56) Documents cités :
EP-A- 0 077 227
US-A- 3 488 268
US-A- 4 018 939

(73) Titulaire : **SAINT-GOBAIN VITRAGE INTERNATIONAL**
**18, avenue d'Alsace**
**F-92400 Courbevoie (FR)**

(72) Inventeur : **Kruger, Albert A.**
**1230 Avenue Y**
**Brooklyn, NY 11235 (US)**

(74) Mandataire : **Muller, René et al**
**SAINT-GOBAIN RECHERCHE 39, quai Lucien Lefranc**
**F-93304 Aubervilliers (FR)**

## Description

L'invention se rapporte aux vitrages de sécurité recouverts d'une couche de polyuréthane transparente, utilisés notamment dans les moyens de transport et dans le bâtiment, et elle a trait plus particulièrement à l'amélioration du comportement de ces vitrages face à la condensation et la formation de buée.

On utilise de plus en plus, en grandes dimensions sur les véhicules de transport ou dans le bâtiment, et en petites dimensions dans la lunetterie, les masques, les lentilles, etc, des vitrages de sécurité du type comprenant un support monolithique ou feuilleté, en verre ou en matière plastique, recouvert, par l'intermédiaire d'une couche adhésive ayant éventuellement des propriétés d'un absorbeur d'énergie, d'une couche de matière plastique transparente antilacérante, c'est-à-dire qu'en cas de bris du vitrage, cette couche recouvre les arêtes vives des éclats en verre et empêche des blessures éventuelles dues à ces arêtes vives ; d'autre part cette couche est autocicatrisable c'est-à-dire qu'elle est constituée d'une matière plastique de laquelle des impressions locales ou des éraflures superficielles disparaissent spontanément après un court laps de temps.

De tels vitrages sont décrits par exemple dans les publications de brevets français 2 187 719, 2 316 913, 2 320 563, 2 398 606 et européens 0 132 198 et 0 131 523. Il peut s'agir par exemple d'un vitrage feuilleté comprenant deux feuille de verre reliées par une feuille intercalaire en matière plastique, par exemple du polyvinylbutyral, et recouvert d'une feuille de matière plastique transparente dont la face au contact du support est essentiellement thermoplastique, alors que la face externe est formée essentiellement d'un polyuréthane thermodurcissable, ou encore à un vitrage feuilleté comprenant une feuille de verre et une feuille de matière plastique formée d'une couche de polyuréthane ayant des propriétés d'absorbeur d'énergie et d'une couche externe de polyuréthane thermodurcissable ayant des propriétés d'autocicatrisation.

Les pare-brise de véhicules de transport, notamment, peuvent être soumis à de brusques variations de température et d'humidité. Dès que la température de leur surface descend en dessous du point de rosée de l'air ambiant, il y a condensation d'eau, ce qui peut gêner le conducteur.

Les effets du phénomène varient d'ailleurs sensiblement suivant le type de surface transparente considéré : sur du verre nu, les gouttes d'eau s'étalent beaucoup plus facilement que sur un film organique. Par simple essuyage du verre nu, on forme un film d'eau relativement régulier et transparent du point de vue optique, dont la présence atténue déjà sensiblement les effets de la condensation. En général, dans le cas d'un film de matière plastique, et cela de façon également sensiblement variable selon la nature du film, les gouttes d'eau de condensation peuvent être beaucoup plus proéminentes et denses ; par simple essuyage, on enlève les gouttes, mais il ne se forme pas de film et l'embuage peut se renouveler plus rapidement.

Diverses solutions ont déjà été proposées pour améliorer le comportement vis-à-vis de la buée de surfaces transparentes en verre ou en matière plastique.

Il est connu, de façon générale, de déposer sur la surface transparente des produits du type hydrophiles, susceptibles de se mélanger à de l'eau lorsqu'il y a risque de buée en formant un film fin et homogène. Par exemple, le dépôt d'une couche de composés du glycol, ou de la glycérine, améliore sensiblement les propriétés des surfaces traitées. Mais ces composés solubles dans l'eau sont éliminés au premier essuyage et doivent donc être perpétuellement renouvelés, ce qui est contraignant et coûteux.

On connait également, par exemple par le brevet allemand 1 928 409, des méthodes de traitement de surfaces transparentes, afin de leur conférer une bonne résistance à l'embuage, consistant à déposer des couches de polymère du type polyacrylate et/ou polyméthacrylate à groupement hydroxyles. Ces couches très hydrophiles absorbent l'eau sans s'y dissoudre. Du fait de l'absorption d'eau ces films gonflent plus ou moins fortement, se ramollissent et ils deviennent plus sensibles à l'abrasion ce qui, à la longue, nuit à la transparence de la surface traitée.

La mise au point de traitements anti-buée par le dépôt de couches anti-buée superficielles s'est ainsi toujours heurtée à des exigences contradictoires : une meilleure action anti-buée amoindrit la résistance à l'abrasion, tandis qu'à une résistance à l'abrasion accrue correspond une diminution de l'effet anti-buée. On a en effet cherché à renforcer la résistance des couches en introduisant dans leur composition un durcissant. Or ce durcissant réagissant généralement par polycondensation avec les polymères constitutifs de la couche, rend indisponibles les groupements de type hydroxyle qui confèrent à la couche les propriétés hydrophiles favorisant l'action anti-buée.

Dans le cas des vitrages revêtus d'une couche de matière plastique antilacérante et autocicatrisable tels qu'ils sont décrits par exemple dans les publications de brevets français et européens cités ci-dessus, le problème de l'embuage, doit être résolu par un traitement du vitrage qui n'altère en aucun cas les excellentes propriétés d'antilacération et d'autocicatrisation qui font sa spécificité grâce à la présence de la couche de polyuréthane transparente de revêtement ; le traitement doit être efficace pendant un temps très long ; il ne doit pas modifier la nature de la couche de polyuréthane, ce qui risquerait d'altérer par ailleurs les propriétés qu'elle confère au vitrage.

On a proposé dans la publication du brevet européen 0 133 111 d'incorporer au moins un agent tensio-actif dans la structure réticulée de la couche de polyuréthane. Par réticulée, on entend une structure comportant un certain nombre de liaison de pontage entre chaines linéaires ou ramifiées. Du fait de l'existence d'un réseau tridimensionnel, il semble que les agents tensio-actifs trouvent des points d'ancrage dans la structure réticulée et ils y restent fixés durablement.

L'agent tensio-actif pénètre dans la couche, tout en conservant les propriétés connues d'hydrophilie dudit tensio-actif. Grâce à la réserve ainsi disponible, l'effet anti-buée persiste beaucoup plus longtemps. Néanmoins, cet effet s'atténue dans le temps et la solution proposée alors n'est pas entièrement satisfaisante.

On connait aussi le document EP-A-0 077 227 qui décrit une membrane en polyuréthane qui comporte greffés radiochimiquement dans toute son épaisseur des monomères de l'acide acrylique.

L'invention a donc pour objet un vitrage feuilleté comportant une couche de revêtement transparente en polyuréthane antilacérante et autocicatrisable résistant à l'embuage, ainsi qu'un procédé de fabrication dudit vitrage. Par vitrage feuilleté, on entend un vitrage comprenant au moins un support (ou substrat) monolithique ou feuilleté et la couche de revêtement en polyuréthane.

Le vitrage selon l'invention comporte une couche de revêtement qui est une couche de polyuréthane aliphatique présentant des liaisons de réticulation et elle comporte, greffés radiochimiquement à sa surface, des monomères et/ou des oligomères de l'acide acrylique ou de sels de cet acide acrylique.

La présence de monomères et/ou d'oligomères de l'acide acrylique ou de sels de cet acide à la surface de la couche de polyuréthane réticulé rend cette surface très hydrophile, de sorte que les fines gouttelettes d'eau condensées formant la buée s'étalent sur la dite surface du polyuréthane et n'altère pas ses propriétés optiques.

En outre, les propriétés de surface telles que les résistances à la rayure et à l'abrasion du polyuréthane sont au moins conservées, à contrario de ce qui est observé lorsqu'on greffe un polymère acrylique sur la surface du polyuréthane. Ces propriétés de surface peuvent même être améliorées dans le cas d'une couche de polyuréthane ayant à la fois des propriétés d'absorbeur d'énergie et des propriétés de surface comme décrit par exemple dans la publication de brevet européen 0 133 090. Ces couches de polyuréthane sont obtenues par coulée réactive de composants essentiellement difonctionnels ou comportant en tant que composant polyol, un mélange de polyol long, d'un allongeur de chaine et d'un polyol de fonctionnalité supérieure à 2.

D'ailleurs, un des problèmes majeurs rencontrés dans l'obtention de la couche de polyuréthane greffée de monomères ou d'oligomeres, de l'acide acrylique ou de sels de cet acide est justement d'éviter cette formation d'un polymère acrylique, en particulier d'un homopolymère d'acide acrylique à la surface du polyuréthane, qui détruirait au moins partiellement les bonnes propriétés de surface du polyuréthane. Le procédé de greffage selon l'invention, décrit par la suite résout ce problème.

L'invention concerne en particulier des vitrages feuilletés comportant des couches transparentes de polyuréthane thermodurcissable. Elle peut aussi concerner des vitrages comportant des couches de polyuréthane obtenues par coulée réactive à température élevée, de l'ordre de 100 à 140°C, de composants difonctionnels, ce procédé d'obtention procurant des réactions de ramification donc également une réticulation. De telles couches sont décrites par exemple dans la publication de brevet européen 0 133 090.

De préférence, l'invention concerne un vitrage feuilleté comportant une couche de matière plastique transparente formée essentiellement d'un polyuréthane thermodurcissable obtenu à partir d'isocyanates difonctionnels aliphatiques comme le 1,6-hexamethylènediisocyanate, le 2,4,4-triméthyl-1,6-hexaméthylènediisocyanate, le 2,4-triméthyl-1,6-hexamethylènediisocyanate, le 1,3-bis (isocyanatométhyl) benzène, le bis (4-isocyanatocyclohexyl) méthane, le bis (3-méthyl-4-isocyanatocyclohexyl) méthane, le 2,2-bis (5′-isocyanatocyclohexyl) propane et le 3-isocyanatométhyl-3,5,5-triméthylcyclohexylisocyanate, ainsi que les biurets, isocyanurates et prépolymères de deux de ces composés ayant une fonctionnalité de 3 ou davantage, et d'autre part de polyols polyfonctionnels, comme les polyols ramifiés tels que les polyesterpolyols et polyétherpolyols obtenus par réaction d'alcools polyfonctionnels, comme le 1,2,3-propanetriol (glycérol), le 2,2-bis (hydroxyméthyl)-1-propanol (triméthyloléthane), le 2,2-bis (hydroxyméthyl)1-butanol (triméthylolpropane), le 1,2,4-butanetriol, le 1,2,6-hexanetriol, le 2,2-bis (hydroxyméthyl)-1,3-propanediol (pentaérythritol) et le 1,2,3,4,5,6-hexanehexol (sorbitol), avec des diacides aliphatiques comme l'acide malonique, l'acide succinique, l'acide glutarique, l'acide adipique, l'acide subérique et l'acide sébacique ou avec des éthers cycliques, comme l'oxyde d'éthylène, l'oxyde de 1,2-propylène et le tétrahydrofurane, le poids moléculaire des polyols ramifiés étant généralement d'environ 250 à 4000 et de préférence d'environ 450 à 2000. Des mélanges de différents polyisocyanates et polyols peuvent être utilisés.

L'invention concerne également un procédé pour la formation d'un vitrage feuilleté comportant une couche de polyuréthane aliphétique présentant des propriétés anti-buée.

Selon le procédé, on greffe de l'acide acrylique à la surface du polyuréthane par greffage radiochimique mettant en jeu un bombardement d'électrons ou une émission de photons. L'irradiation de la couche superficielle du polyuréthane provoque notamment la rupture de chaines de polyuréthane et la formation de radicaux dont une partie peut ainsi réagir avec l'acide acrylique.

De préférence, le procédé radiochimique utilise un bombardement d'électrons afin de limiter l'action du rayonnement à la couche superficielle du polyuréthane. On s'est aperçu en effet, qu'un rayonnement par rayons X trop énergétique altérait les propriétés mécaniques de la couche de polyuréthane et qu'en outre, il provoquerait une homopolymérisation très rapide de l'acide acrylique.

Un procédé préféré pour le greffage consiste à utiliser un rayonnement électronique de faible énergie dont la pénétration dans la couche de polyuréthane est limitée à environ 100 à 150 μm.

En outre, pour éviter une pénétration trop rapide de l'acide acrylique lors de son dépôt sur la couche de polyuréthane, de préférence on utilise une solution aqueuse dont la teneur en acide acrylique est inférieure à 20% en poids et de préférence inférieure à 10% en poids.

La dilution de l'acide acrylique dans de l'eau présente aussi l'avantage de limiter la réaction d'homopolymérisation de l'acide acrylique lors de l'irradiation au cas où cette irradiation suit le dépôt de la solution aqueuse d'acide acrylique sur la couche de polyuréthane.

La couche de polyuréthane peut être irradiée au préalable, puis mise en présence de la solution aqueuse d'acide acrylique.

De préférence, on dépose d'abord la solution aqueuse d'acide acrylique sur la couche de polyuréthane et la couche ainsi couverte est soumise à un rayonnement de faible énergie, avantageusement à un rayonnement électronique de faible énergie pour les raisons évoquées précédemment.

Lorsque la couche de polyuréthane a été irradiée et qu'elle comporte essentiellement sa surface des monomères et oligomères d'acide acrylique, on peut lui faire subir un traitement ultérieur par action d'une base telle que la soude ou la potasse, afin de transformer les groupes acides en carboxylates dont le caractère hydrophyle est plus accentué et qui présentent par conséquent un effet anti-buée encore amélioré.

D'autres avantages et caractéristiques de l'invention apparaitront dans la description suivante d'exemples de couches anti-buée conformes à l'invention.

EXEMPLE 1

La couche de polyuréthane réticulée traitée est celle obtenue selon le procédé décrit par exemple dans la publication de brevet français 2 398 606. C'est une couche de 0,4 mm d'épaisseur formée par exemple à partir du mélange réactionnel suivant :
- 1000 g d'un polyétherpolyol préparé par condensation d'oxyde de propylène avec un triol, ayant un poids moléculaire d'environ 450 et une teneur en radicaux OH libres de 10,5 à 12%,
- 23 g de di-t-butyl p-crésol,
- 0,5 g de dilaurate de dibutylétain,
- 1000 g d'un biuret de 1-6 hexaméthylènediisocyanate ayant une teneur en radicaux NCO libres de 21 à 25%.

On apporte ce mélange réactionnel au moyen d'une tête de coulée, par exemple celle décrite dans la publication de brevet français 2 347 170 sur un support de coulée plan. On polymérise la couche par action de la chaleur. Cette couche est ensuite recouverte d'une couche adhésive en un polyuréthane essentiellement thermoplastique. La feuille à deux couches est détachée du support de coulée.

La feuille est assemblée avec un support en verre par l'intermédiaire de la couche de polyuréthane thermoplastique.

Sur la couche externe de polyuréthane on dépose une solution aqueuse à 5% d'acide acrylique, à raison d'environ 0,5 g de solution pour 100 $cm^2$ de surface à traiter.

Le vitrage est ensuite soumis à un rayonnement électronique fonctionnant sous 170 kV et 1,8 MA. La dose revue est d'environ 1 Mrad.

La dose est la quantité d'énergie transférée à la matière qui s'exprime en unités d'énergie par unités de masse du matériau irradié (1 rad = $6,25.10^3$ eV/g).

Après irradiation, le vitrage est trempé dans une solution de soude à 1% afin de transformer les groupes acides en carboxylates de sodium.

Le vitrage finalement obtenu présente des propriétés anti-buée. Les caractéristiques mécaniques de la couche de polyuréthane ne sont pas affectées.

EXEMPLE 2

On prépare un vitrage de la même manière que dans l'exemple 1.

Sur la couche externe de polyuréthane, on dépose une solution aqueuse à 10% d'acide acrylique, à raison de 0,5 g de solution pour 100 cm$^2$ de surface à traiter.

Le vitrage est ensuite soumis à un rayonnement électronique fonctionnant sous 170 kV et 1,7 mA, en en présence d'oxygène afin d'inhiber la réaction d'homopolymérisation de l'acide acrylique. La dose absorbée est de 1 Mrad.

## EXEMPLE 3

On opère de la même façon que dans l'exemple 1 sauf que la dose absorbée est doublée par une double irradiation. On améliore encore les propriétés anti-buée.

## EXEMPLE 4

On prépare un vitrage de la même manière que dans l'exemple 1, sauf qu'on traite une couche de polyuréthane obtenue de la façon suivante :

On estérifie 460 parties en poids de 1,6-hexanediol et 70 parties de triméthylolpropane avec 167 parties d'acide adipique, 56 parties d'acide o-phtalique et 247 parties d'acide i-phtalique jusqu'à atteindre une teneur en radicaux OH libres d'environ 4,3% en poids et un indice d'acide (DIN 53.402) d'environ 1. Le polyesterpolyol faiblement ramifié ainsi obtenu constitue le composant polyol pour le mélange réactionnel. On ajoute au polyesterpolyol 0,1% en poids d'un ester fluoroalkylé comme agent d'étalement et 1% en poids de sébaçate de bis (1,2,2,6,6-pentaméthyl-4-pipéridyle) comme agent de protection contre la lumière.

Pour la préparation du mélange réactionnel on chauffe 100 g d'un polyisocyanate essentiellement trifonctionnel à savoir un biuret de 1,6-hexaméthylènediisocyanate, ayant une teneur en radicaux NCO libres de 23% en poids, avec 216 g du polyesterpolyol décrit ci-dessus jusqu'à une température de 80°C et on les agite à cette température pendant 10 minutes. Le rapport en équivalents NCO/OH du mélange de réaction est ainsi de 1.

Après le mélange des deux composants, on dépose avec une tête de coulée le mélange réactionnel en une épaisseur de couche de 0,5 mm.

## EXEMPLE 5

On opère comme dans l'exemple 1 sauf qu'on traite une couche de polyuréthane obtenue de la façon suivante :

On mélange vivement pendant 10 minutes à 40°C, 100 g d'un polyisocyanate essentiellement trifonctionnel contenant des radicaux isocyanurate à base de 1,6-hexaméthylènediisocyanate, ayant une teneur en radicaux NCO libres de 21,5% en poids, avec 94,2 g d'une polycaprolactone trifonctionnelle ayant une teneur en radicaux OH libres de 9,3% en poids. Le rapport NCO/OH est ainsi de 1. On ajoute au préalable comme additifs à la polycaprolactone, 0,015% en poids par rapport au poids de la poly-caprolactone, de dilaurate de dibutylétain comme catalyseur de réaction, 0,1% en poids d'un ester fluoroalkylé comme agent d'étalement et 1% en poids de sébaçate de bis (1,2,2,6,6-pentaméthyl-4-pipéridyle) comme agent de protection contre la lumière.

Après mélange des deux composants, on applique à la racle le mélange réactionnel en une épaisseur de couche de 0,5 mm.

Dans tous les exemples précédents, les vitrages obtenus présentent des propriétés anti-buée améliorées par rapport aux vitrages munis d'une couche de polyuréthane non greffée radiochimiquement par des monomères ou oligomères de l'acide acrylique.

Les caractéristiques mécaniques de la couche de polyuréthane, notamment la résistance à la rayure et à l'abrasion sont équivalentes à celles d'une couche non greffée.

Le tableau ci-après regroupe les résultats obtenus.

## TABLEAU

| | Résistance à la rayure | Résistance à l'abrasion | Angle de contact | test de buée (haleine) |
|---|---|---|---|---|
| Exemple 1 | 0,26 N | 2,0 % | 20° | buée presque transparente |
| Exemple 2 | 0,25 N | 2,3 % | 22° | buée presque transparente |
| Exemple 3 | 0,24 N | 1,9 % | 7° | condensat homogène et transparent |
| Exemple 4 | 0,25 N | 1,9 % | 20° | buée presque transparente |
| Exemple 5 | 0,25 N | 1,9 % | 20° | buée presque transparente |
| Ex. compar. sans trait. | 0,25 N | 2,4 % | 63° | buée laiteuse presque blanche |

La résistance à la rayure de la surface polyuréthane est déterminée selon la méthode Erichsen qui consiste à faire tourner un échantillon de 10 sur 10 cm sous une pointe en diamant formant un angle de 50° arrondie à un rayon de 15 µm qui est chargée de poids croissants. La charge maximale, exprimée en Newtons, quine provoque pas encore de rayures permanentes, sera notée et considérée comme la résistance à la rayure.

La résistance à l'abrasion est déterminée avec l'appareil Taber Abraser selon la méthode ASTM-1044 pour l'abrasion et selon ASTM-1003 pour la mesure de la diffusion de la lumière, exprimée en pourcent, obtenue par la détérioration de la surface. On procède à 100 révolutions de l'échantillon 10 sur 10 cm sous les meules abrasives du type CS 10 F.

Pour apprécier l'effet antibuée ou autrement dit la facilité de mouiller la surface d'un film homogène d'eau on observe l'angle de contact qui résulte du dépôt d'une goutte d'eau sur la surface du polyuréthane. Cette mesure est très facile à faire à l'aide d'un microscope avec goniomètre intégré.

Finalement, on peut juger du bon ou mauvais fonctionnement d'une couche anti-buée en soufflant simplement sur la surface. L'aspect du condensat obtenu peut varier entre très mauvais (buée blanche, laiteuse) et excellent (couche homogène d'humidité parfaitement transparente, donc invisible).

**Revendications**

1. Vitrage feuilleté comportant une couche de polyuréthane aliphatique présentant des liaisons de réticulation, en tant que couche de revêtement, caractérisé en ce que la couche de polyuréthane comporte, greffés radiochimiquement à sa surface, des monomères et/ou des oligomères de l'acide acrylique ou de sels de cet acide acrylique.

2. Procédé de fabrication d'un vitrage feuilleté par assemblage d'un support monolithique ou feuilleté en verre ou en matière plastique avec une couche de polyuréthane aliphatique présentant des propriétés anti-buée et/ou des propriétés de surfaces améliorées, caractérisé en ce qu'on greffe de l'acide acrylique à la surface du polyuréthane par mise en présence de la couche de polyuréthane avec l'acide acrylique et greffage par action d'un bombardement d'électrons ou d'une émission de photons.

3. Procédé selon la revendication 2, caractérisé en ce qu'on greffe l'acide acrylique par un bombardement électronique, la quantité d'énergie transmise étant de 1 Mrad environ.

4. Procédé selon une des revendications 2 et 3, caractérisé en ce que la mise en présence de la couche de polyuréthane avec l'acide acrylique s'effectue par dépôt sur la couche de polyuréthane d'une solution aqueuse dont la teneur en acide acrylique est inférieure à 20% et de préférence inférieure à 10% en poids.

5. Procédé selon la revendication 4, caractérisé en ce qu'on dépose la solution aqueuse d'acide acrylique sur la couche de polyuréthane et on soumet la couche ainsi couverte au bombardement électronique.

6. Procédé selon une des revendications 2 à 5, caractérisé en ce qu'après greffage de l'acide acrylique ou d'oligomères de cet acide à la surface de la couche de polyuréthane, on transforme les groupes acides en groupes carboxylates par action d'une base.

## Claims

1. Laminated glazing incorporating an aliphatic polyurethane layer having crosslinking bonds, serving as a covering layer and characterized in that the polyurethane layer has, radiochemically grafted on its surface, monomers and/or oligomers of acrylic acid or salts of the latter.

2. Process for the production of a laminated glazing by assembling a monolithic or laminated glass or plastics material support with an aliphatic polyurethane layer having improved surface and/or demisting properties, characterized in that acrylic acid is grafted on the polyurethane surface by bringing together the polyurethane layer and the acrylic acid and grafting by the action of an electron bombarbement or a photon emission.

3. Process according to claim 2, characterized in that acrylic acid is grafted by electron bombardement, the energy quantity transmitted being approximately 1 Mrad.

4. Process according to one of the claims 2 and 3, characterized in that the bringing together of the polyurethane layer and the acrylic acid takes place by depositing on the polyurethane layer of an aqueous solution, whose acrylic acid content is below 20% and preferably below 10% by weight.

5. Process according to claim 4, characterized in that the aqueous acrylic acid solution is deposited on the polyurethane layer and the thus covered layer is subject to electron bombardment.

6. Process according to one of the claims 2 to 5, characterized in that after grafting the acrylic acid or oligomers of said acid on the surface of the polyurethane layer, the acid groups are transformed into carboxylate groups by the action of a base.

## Ansprüche

1. Verbundglas mit einer Schicht aus alyphatischem Polyurethan, die Vernetzungsbindungen aufweist und als Überzugsschicht dient, **dadurch gekennzeichnet,** daß die Polyurethan-Schicht radiochemisch auf ihre Oberfläche aufgebrachte Monomere und/oder Oligomere aus Acrylsäure oder Salzen dieser Acrylsäure aufweist.

2. Verfahren zur Herstellung eines Verbundglases durch Verbindung einer monolithischen oder geschichteten Unterlage aus Glas oder Kunststoff mit einer Schicht aus alyphatischem Polyurethan, welche beschlagfrei ist und/oder verbesserte Oberflächeneigenschaften aufweist, **dadurch gekennzeichnet,** daß das Aufbringen von Acrylsäure auf die Polyurethanfläche durch Zusammenbringen der Polyurethan-Schicht und der Acrylsäure und durch Aufbringung mittels eines Elektronenbeschusses oder einer Photonenemission erfolgt.

3. Verfahren nach Anspruch 2, **dadurch gekennzeichnet,** daß die Acrylsäure durch einen Elektronenbeschuß aufgebracht wird, wobei die übertragene Energiemenge ungefähr 1 Mrad beträgt.

4. Verfahren nach einem der Ansprüche 2 und 3, **dadurch gekennzeichnet,** daß sich das Zusammenbringen der Polyurethan-Schicht und der Acrylsäure durch Niederschlag einer wäßrigen Lösung auf die Polyurethan-Schicht vollzieht, deren Acrylsäuregehalt kleiner als 20% und vorzugsweise kleiner als 10 Gewichts-% ist.

5. Verfahren nach Anspruch 4, **dadurch gekennzeichnet,** daß die wäßrige Acrylsäurelösung auf die Polyurethan-Schicht aufgetragen und die so überzogene Schicht einem Elektronenbeschuß ausgesetzt wird.

6. Verfahren nach einem der Ansprüche 2 bis 5, dadurch gekennzeichnet, daß nach der Aufbringung der Acrylsäure oder der Oligomere dieser Säure auf die Oberfläche der Polyurethan-Schicht die Säuregruppen durch Wirkung einer Base in Carboxylatgruppen umgewandelt werden.